# EUROPEAN PATENT SPECIFICATION

(11) **EP 2 241 940 B1**
(45) Date of publication and mention of the grant of the patent: **29.02.2012**
(21) Application number: 10159917.3
(22) Date of filing: 14.04.2010
(51) Int. Cl.: G03G 15/00, G03G 15/04, G02B 6/42, H04N 1/193

(54) **Illuminating device and image reading apparatus**
Beleuchtungsvorrichtung und Bildlesevorrichtung
Dispositif d'éclairage et appareil de lecture d'images

(30) Priority: 17.04.2009 US 170573 P; 17.04.2009 US 170574 P; 17.04.2009 US 170576 P
(43) Date of publication of application: 20.10.2010
(73) Proprietor: Kabushiki Kaisha Toshiba, Tokyo 105-8001 (JP); Toshiba TEC Kabushiki Kaisha, Shinagawa-ku Tokyo 141-8664 (JP)
(72) Inventor: Endoh, Sasuke, Shinagawa-ku Tokyo 141-8664 (JP)
(74) Representative: Gendron, Vincent Christian

(56) References cited:
- EP-A1- 1 511 289
- JP-A- 8 279 885

## Description

### CROSS-REFERENCE TO RELATED APPLICATION

This application is based upon and claims the benefit of priority from: US provisional application 61/170573, filed on April 17, 2009; US provisional application 61/170574, filed on April 17, 2009; and US provisional application 61/170576, filed on April 17, 2009, the entire contents of each of which are incorporated herein by reference.

### TECHNICAL FIELD

The present invention relates to an illuminating device used for an image reading apparatus. Such a device is well-known by the skilled person notably by the example given by the document EP1511289.

### BACKGROUND

In an image reading apparatus used for a digital copying machine, in order to read an image of one line extending in a main scanning direction, a linear light extending in the main scanning direction is irradiated to a document from a light source, the reflected light from the document is condensed by a lens or the like and is made incident on an image sensor.

When the illumination light is irradiated to an image reading area of the document from only one direction, there is a fear that uneven irradiation of the illumination light is generated.

### SUMMARY

In order to solve the problem, according to an aspect of the invention, an illuminating device includes a light source to generate an illumination light used for reading of an image, a light guide body that extends in a specified direction and includes an incident surface which is formed at one end in the specified direction and on which the illumination light from the light source is incident, a reflecting surface to diffuse or reflect the illumination light incident from the incident surface, a first exit surface through which a first light component diffused or reflected by the reflecting surface and directly directed to an image reading area passes, and a second exit surface which faces a direction different from the first exit surface and through which a second light component diffused or reflected by the reflecting surface and directed to a direction different from the first light component passes, and a reflecting member to reflect the second light component exiting from the second exit surface to the image reading area.

### DESCRIPTION OF THE DRAWINGS

FIG. 1 is an outer appearance view of an image forming apparatus.
FIG. 2 is a sectional view of an image reading apparatus of embodiment 1.
FIG. 3 is a view showing relation between a reading area of an image and an illumination area.
FIG. 4 is a sectional view of an illuminating device of embodiment 1.
FIG. 5 is a top view of the illuminating device of embodiment 1.
FIG. 6 is a sectional view of an illuminating device of a modified example of embodiment 1.
FIG. 7 is a sectional view of an illuminating device of another modified example of embodiment 1.
FIG. 8 is a top view of an illuminating device of embodiment 2.
FIG. 9 is a top view of an illuminating device of a modified example of embodiment 2.
FIG. 10 is a sectional view of an illuminating device of embodiment 3.
FIG. 11 is a sectional view of the illuminating device of embodiment 3.
FIG. 12 is a view showing a relation between a position in a sub-scanning direction and illuminance in the illuminating device of embodiment 3.
FIG. 13 is a sectional view of an illuminating device of a comparative example of embodiment 3.
FIG. 14 is a view showing a relation between a position in a sub-scanning direction and illuminance in the illuminating device of the comparative example of embodiment 3.
FIG. 15 is a view showing a relation between the output of an image sensor and the amount of light incident on the image sensor.

### DETAILED DESCRIPTION

Hereinafter, embodiments of the invention will be described with reference to the drawings.

### (Embodiment 1)

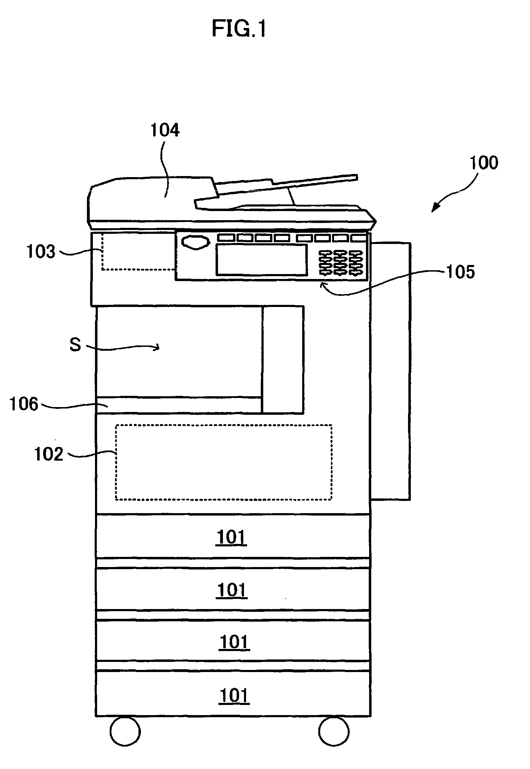

An image forming apparatus (MFP: Multi Function Peripheral) of this embodiment will be described with reference to FIG. 1. FIG. 1 is a front view showing the outline of the image forming apparatus.

The image forming apparatus 100 includes plural paper feed cassettes 101, and each of the paper feed cassettes 101 contains plural sheets. The plural sheets contained in each of the paper feed cassettes 101 are separated by a pick up roller one by one and are supplied to a sheet conveyance path. The sheet passes through the sheet conveyance path and is supplied to an image forming section 102.

The image forming section 102 forms a developer image on the sheet based on image data. The image data includes, for example, image data transmitted from an external equipment (for example, Personal Computer) to the image forming apparatus 100 and image data generated by a reading operation of an image reading apparatus 103.

The image reading apparatus 103 scans an image of a sheet document and a book document, and generates image data. FIG. 1 shows a part of the image reading apparatus 103. A device (ADF: Auto Document Feeder) for automatically feeding documents to the image reading apparatus 103 is disposed above the image reading apparatus 103.

An operation panel 105 for inputting various information to the image forming apparatus 100 is disposed at an upper part of the image forming apparatus 100. The operation panel 105 can be composed of, for example, a button switch or a liquid crystal panel.

In the image forming section 102, specifically, after an electrostatic latent image corresponding to the image data is formed on a photoconductive surface of a photoreceptor, a developer is supplied to form a developer image. The developer image formed on the photoconductive surface of the photoreceptor is transferred to a sheet. The sheet is brought into contact with the surface of the photoreceptor, so that the developer image can be transferred to the sheet. On the other hand, after the developer image on the photoreceptor is transferred to an intermediate transfer belt, it can be transferred from the intermediate transfer belt to the sheet.

The developer image transferred to the sheet is heated and fixed to the sheet by a fixing unit (not shown). The sheet on which the developer image is fixed passes through the sheet conveyance path and is discharged to a paper discharge space S. A storage tray 106 on which sheets are stacked is disposed in the paper discharge space S.

In the structure shown in FIG. 1, the image reading apparatus 103 is provided in the image forming apparatus 100 as a digital multi function peripheral. However, also when the image reading apparatus is provided in an image forming apparatus as a digital copying machine, or the product is constructed of only the image reading apparatus, the invention can be applied.

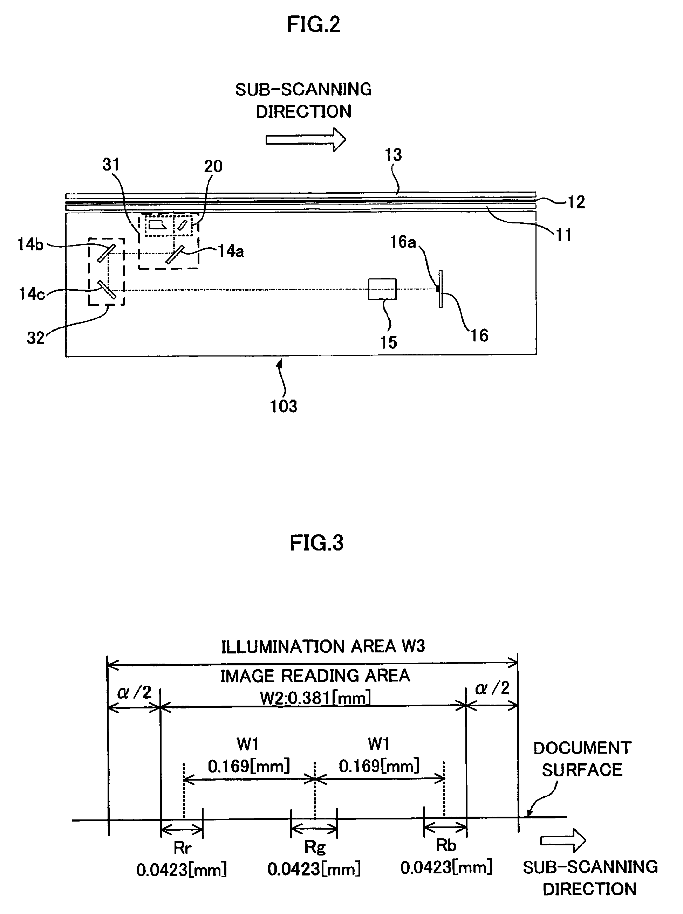

Next, a structure of the image reading apparatus 103 of this embodiment will be described with reference to FIG. 2. FIG. 2 is a sectional view of the image reading apparatus 103 along a sub-scanning direction.

A document 12 is placed on an upper surface of a platen glass 11, and a read surface of the document 12 faces the upper surface of the platen glass 11. A platen cover 13 can rotate with respect to a main body of the image reading apparatus 103, and moves between a position where the upper surface of the platen glass 11 is opened and a position where the upper surface of the platen glass 11 is closed. When the platen cover 13 is moved to the closed position, the document 12 is pressed to the platen glass 11. Incidentally, the platen cover 13 constitutes part of the ADF 104.

An illuminating device 20 irradiates an illumination light to the document 12. The illuminating device 20 extends in a direction (main scanning direction) perpendicular to the paper plane of FIG. 2, and the illuminating device 20 irradiates a linear illumination light extending in the longitudinal direction of the illuminating device 20. The linear illumination light is irradiated to an image area of one line extending in the main scanning direction in the document 12. A specific structure of the illuminating device 20 will be described later.

The illumination light of the illuminating device 20 is reflected by the document 12, and the reflected light from the document 12 is reflected by folding mirrors 14a, 14b and 14c, and is directed to an imaging lens 15. The imaging lens 15 condenses the light from the folding mirror 14c and forms an image on an image sensor 16. The image sensor 16 includes plural light receiving elements 16a arranged in a direction perpendicular to the paper plane of FIG. 2. The plural light receiving elements 16a are disposed correspondingly to the linear illumination light, and are disposed to be capable of receiving the linear illumination light. The respective light receiving elements 16a output electric signals corresponding to the amount of incident light by photoelectric conversion. As the image sensor 16, for example, a CCD sensor can be used.

The reflected light from the document 12 is incident on the plural light receiving elements 16a, so that an image area of one line extending in the main scanning direction in the document 12 can be read.

A first carriage 31 supports the illuminating device 20 and the folding mirror 14a, and can move in the sub-scanning direction by receiving a driving force from a motor (not shown). A second carriage 32 supports the folding mirrors 14b and 14c, and can move in the sub-scanning direction by receiving a driving force from a motor (not shown).

The first carriage 31 and the second carriage 32 relatively move in the sub-scanning direction, and keep the optical path length from the surface of the document 12 (reflecting surface of the illumination light) to the imaging surface of the image sensor 16 constant.

For example, the movement speed of the first carriage 31 and the second carriage 32 in the sub-scanning direction can be set to a speed ratio of "2:1 (= first carriage : second carriage)". Besides, the first carriage 31 and the second carriage 32 synchronize with the timing (signal to control the output of the image sensor 16) when the image sensor 16 reads an image, and move in the sub-scanning direction.

The first carriage 31 and the second carriage 32 are moved, so that the illumination light from the illuminating device 20 can be scanned in the sub-scanning direction. While the first carriage 31 and the second carriage 32 are moved in the sub-scanning direction, the image area of one line extending in the main scanning direction in the document 12 is successively read. Then, the whole surface of the document 12 can be read.

Next, a relation between an image reading area and an illumination area of illumination light will be described with reference to FIG. 3. FIG. 3 shows the image reading area of the document 12 in the sub-scanning direction.

In FIG. 3, as the image sensor 16, CCD image sensors of respective colors of R, G and B are used, the resolution is 600 dpi, and an interval (length in the sub-scanning direction) between the adjacent CCD image sensors is an interval of four lines. A width (length in the sub-scanning direction) of each of image reading areas Rr, Rg and Rb of the respective colors is 0.0423 [mm], and an interval (length in the sub-scanning direction) W1 between the adjacent image reading areas is 0.169 [mm]. The interval W1 is based on the center of each of the image reading areas Rr, Rg and Rb. Besides, a width (length in the sub-scanning direction) of an image reading area W2 of one line extending in the main scanning direction is 0.381 [mm] .

When consideration is given to a manufacturing error of the image reading apparatus 103 and a shift of the illumination area due to vibration of the carriages 31 and 32, in order to stably perform the illumination to the image reading area, it is desirable that the illumination area W3 is made wider than the image reading area W2. That is, it is desirable that the width of the illumination area W3 is set so that the image reading area W2 is always located within the range of the illumination area W3.

In FIG. 3, each of both ends of the illumination area W3 is spaced by α/2 from each of both ends of the image reading area W2. The difference α between the width of the illumination area W3 and the width of the image reading area W2 can be appropriately set.

FIG. 3 shows an example illustrating the structure of the image sensor 16, and another structure may be adopted. For example, when the number of lines of the image sensor or the interval between the adjacent image sensors is changed, the image reading area W2 and the illumination area W3 have only to be set in the structure after the change.

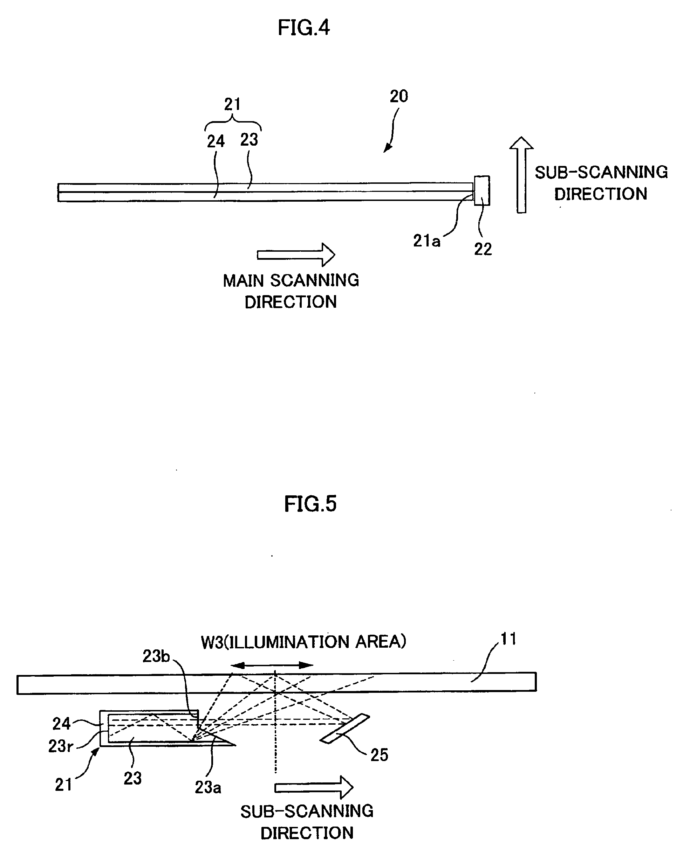

Next, the structure of the illuminating device 20 will be described with reference to FIG. 4 and FIG. 5. FIG. 4 is a top view of the illuminating device 20 when viewed from the side of the platen glass 11, and FIG. 5 is a sectional view of the illuminating device 20 when the illuminating device 20 is cut along a plane perpendicular to the longitudinal direction.

As shown in FIG. 4, the illuminating device 20 includes a light guide body 21 extending in the main scanning direction, and a light source 22 fixed to one end of the light guide body 21. As the light source 22, for example, a light emitting diode (LED) can be used, and one or more light emitting diodes can be provided. The length of the light guide body 21 in the main scanning direction is set to the length corresponding to the length of the document 12 in the main scanning direction.

The illumination light irradiated from the light source 22 is incident on the inside of the light guide body 21 from the incident surface 21a of the light guide body 21, travels along the longitudinal direction of the light guide body 21. Specifically, the light incident on the light guide body 21 travels along the longitudinal direction of the light guide body 21 while being reflected in the inside of the light guide body 21.

In this embodiment, although the light source 22 is disposed at one end of the light guide body 21, the light sources 22 can be disposed at both ends of the light guide body 21, and the light amount of the illuminating devices 20 can be increased.

The light guide body 21 includes a light guide prism 23 and a case 24 covering a part of the light guide prism 23. The light guide prism 23 can be made of a resin having a high optical transmittance, such as acryl or polycarbonate, or optical glass.

The light guide prism 23 has a first exit surface 23a formed of a plane and a second exit surface 23b, and each of the exit surfaces 23a and 23b extends in the longitudinal direction of the light guide body 21.

The light guide prism 23 has a reflecting surface 23r to diffuse or reflect the incident light from the light source 22 to the first exit surface 23a and the second exit surface 23b. The reflecting surface 23r is formed of, for example, minute irregularities or prints. As shown in FIG. 5, the case 24 covers the area of the light guide prism 23 except for the exit surfaces 23a and 23b. The light incident on the light guide prism 23 from the light source 22 is reflected or diffused by the reflecting surface 23r, and exits only from the exit surfaces 23a and 23b.

The case 24 can be formed of a metal plate having a high reflectivity, and as the metal plate, for example, an aluminum plate or a stainless plate can be used. Besides, the case 24 can be formed of a white resin, or a reflecting coating can be applied to the inner wall surface (surface in contact with the light guide prism 23) of the case 24.

The case 24 has only to reflect the light incident on the light guide prism 23. When the illumination light from the light source 22 is totally reflected in the inside of the light guide prism 23, the case 24 can be omitted.

The light irradiated from the light source 22 is incident from the one end of the light guide body 21, and travels in the longitudinal direction of the light guide body 21 while being reflected in the inside of the light guide body 21. Besides, the light traveling in the inside of the light guide body 21 exits from the exit surfaces 23a and 23b of the light guide prism 23 to the outside of the light guide body 21. When the light traveling in the inside of the light guide body 21 is totally reflected, the light from the light source 22 can be efficiently made to exit from the exit surfaces 23a and 23b.

The first exit surface 23a is inclined with respect to the surface of the platen glass 11, and faces the platen glass 11. The light exiting from the first exit surface 23a reaches the platen glass 11.

The second exit surface 23b is substantially perpendicular to the surface of the platen glass 11, and is positioned at a side closer to the platen glass 11 than the first exit surface 23a. A reflecting member 25 is provided at a position opposite to the second exit surface 23b in the sub-scanning direction. The light exiting from the second exit surface 23b travels along the sub-scanning direction, and reaches the reflecting member 25. The reflecting member 25 diffuses or reflects the light from the second exit surface 23b, and guides it to the platen glass 11.

When the reflecting member 25 is formed of a member having a shiny reflecting surface or a reflecting coating is applied to a reflecting surface, the light from the second exit surface 23b can be efficiently reflected to the platen glass 11. Besides, the reflecting surface of the reflecting member 25 can be formed into a shape satisfying a total reflection condition. Besides, a member to diffuse light may be used for the reflecting member 25. The light diffused or reflected by the reflecting member 25 is superimposed on the light exiting from the first exit surface 23a at the platen glass 11. The illumination lights reach the platen glass 11 from directions different from each other.

The reflecting surface of the reflecting member 25 can be formed of a plane surface or a curved surface (concave surface or convex surface). The shape of the reflecting surface of the reflecting member 25 can be appropriately set based on the relation between the reflecting characteristic of the reflecting member 25 and the illumination area W3.

At least one of the first exit surface 23a and the second exit surface 23b can be made to have a positive or negative optical power (an inverse of a focal distance). Specifically, consideration is given to the illumination area W3, and the first exit surface 23a or the second exit surface 23b can be made to have the optical power. For example, the second exit surface 23b is made to have the positive optical power, and the reflecting member 25 can be formed of a convex surface. Besides, the second exit surface 23b is made to have the negative optical power, and the reflecting member 25 can be formed of a concave surface.

The light guide body 21 (including the light source 22) and the reflecting member 25 are fixed in a state where they are positioned with respect to the case (not shown) of the illuminating device 20. For example, a projection for positioning is provided to the light guide body 21 or the reflecting member 25, and the projection can be inserted in a groove formed in the case of the illuminating device 20. The light guide body 21 and the reflecting member 25 are disposed along the platen glass 11.

The reflected light from the document 12 passes through between the light guide body 21 and the reflecting member 25, and is directed to the folding mirror 14a. The interval (length in the sub-scanning direction) between the light guide body 21 and the reflecting member 25 has only to be set so that the reflected light from the document 12 (image reading area) can reach the folding mirror 14a.

According to this embodiment, the light from the light source 22 is divided into the component exiting from the first exit surface 23a and the component exiting from the second exit surface 23b, so that the light from the light source 22 can be efficiently irradiated to the document 12 while the illuminating device 20 is made to have the simple structure. Besides, the illumination lights are irradiated to the image reading area from the directions different from each other (sides where the light guide body 21 and the reflecting member 25 are positioned), so that the uneven irradiation of the illumination light can be suppressed.

Further, the optical design can be performed in the state where the component exiting from the first exit surface 23a and the component exiting from the second exit surface 23b are separated, and the degree of freedom of the design can be improved.

In this embodiment, although the light exiting from the second exit surface 23b travels in the direction substantially parallel to the platen glass 11, the light exiting from the second exit surface 23b can be directed to the direction of moving away from the platen glass 11. Here, the reflecting member 25 has only to be disposed on the optical path of the light exiting from the second exit surface 23b.

In this embodiment, although the light guide body 21 has the structure shown in FIG. 5, another structure may be adopted. That is, the light guide body 21 has only to have the function to divide the light from the light source 22 into the component directly directed to the platen glass 11 and the component directed to the reflecting member 25.

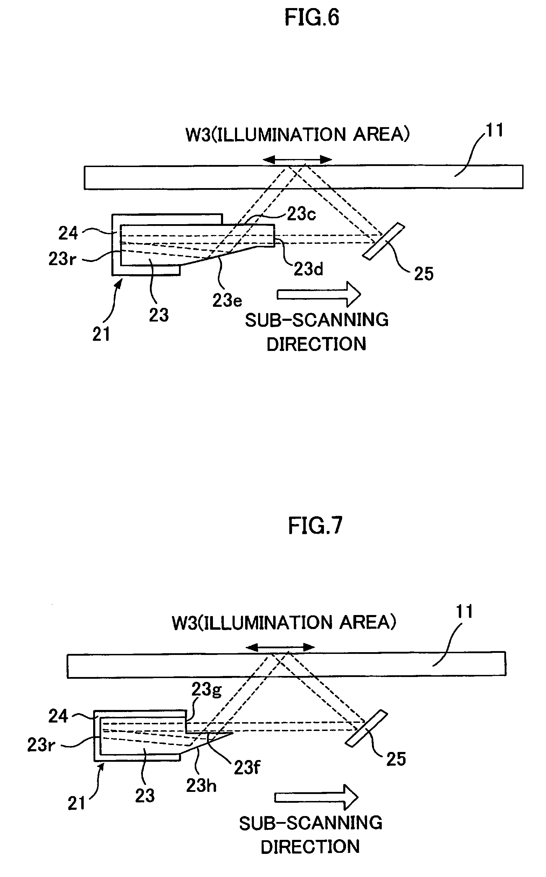

Modified examples (one example) of the light guide body 21 will be described with reference to FIG. 6 and FIG. 7. The structures shown in FIG. 6 and FIG. 7 are the modified examples different from each other. In FIG. 6 and FIG. 7, a member having the same function as that of a member described in this embodiment is denoted by the same reference numeral.

In the structure shown in FIG. 6, a light guide body 21 includes a light guide prism 23 and a case 24. A first exit surface 23c of the light guide prism 23 is disposed substantially in parallel to a surface of a platen glass 11, and faces the platen glass 11. The light exiting from the first exit surface 23c directly reaches the platen glass 11.

Although the first exit surface 23c is formed of a plane surface, it can be formed of another surface. For example, the first exit surface 23c can be made a surface to give a positive refractive power (positive optical power) to the exit light. Besides, the first exit surface 23c can be inclined with respect to the platen glass 11.

Here, the light reflected by a reflecting surface 23e of the light guide prism 23 is directed to the first exit surface 23c, and the reflecting surface 23e is formed into a shape satisfying the total reflection condition. Besides, the light reflected by the reflecting surface 23e is incident on the first exit surface 23c at an angle at which the total reflection does not occur, and passes through a partial area of the first exit surface 23c.

A second exit surface 23d extends in a direction perpendicular to the surface of the platen glass 11, and is disposed at a position more distant from the platen glass 11 than the first exit surface 23c. The second exit surface 23d is provided at a position departing from an optical path of the illumination light passing through the first exit surface 23c.

The light exiting from the second exit surface 23d travels in the sub-scanning direction, and reaches a reflecting member 25. The reflecting member 25 reflects the light from the second exit surface 23d, and guides it to the platen glass 11.

The second exit surface 23d can be formed of a plane surface or a curved surface. Here, the second exit surface 23d can be made to have a positive or negative optical power. When the second exit surface 23d is made to have the positive optical power, the light reaching the second exit surface 23d can be made to exit in a state where it is condensed. Besides, the second exit surface 23d converts the diffusing incident light into a parallel light and can cause it to exit.

In the structure shown in FIG. 6, the light guide prism 23 is covered with the case 24 except for the exit surfaces 23c and 23d and the total reflecting surface 23e. Here, the reflecting surface 23e may not have the shape satisfying the total reflection condition, and the reflecting surface 23e can be covered with the case 24. Besides, when the illumination light is totally reflected in the inside of the light guide prism 23, the case 24 can be omitted.

In the structure shown in FIG. 7, a light guide body 21 includes a light guide prism 23 and a case 24. A first exit surface 23f of the light guide prism 23 is disposed substantially in parallel to the surface of a platen glass 11, and faces the platen glass 11. Light exiting from the first exit surface 23f directly reaches the platen glass 11.

Here, light reflected by a reflecting surface 23h of the light guide prism 23 is directed to the first exit surface 23f, and the reflecting surface 23h is formed into a shape satisfying the total reflection condition.

A second exit surface 23g extends in a direction perpendicular to the surface of the platen glass 11, and is positioned at a side closer to the platen glass 11 than the first exit surface 23f. Light exiting from the second exit surface 23g travels along the sub-scanning direction, and reaches a reflecting member 25. The reflecting member 25 reflects the light from the second exit surface 23g and guides it to the platen glass 11.

In the structure shown in FIG. 7, the light guide prism 23 is covered with the case 24 except for the exit surfaces 23f and 23g and the total reflecting surface 23h. Here, the reflecting surface 23h may not have the shape satisfying the total reflection condition, and the reflecting surface 23h can be covered with the case 24. Besides, when the illumination light is totally reflected in the inside of the light guide prism 23, the case 24 can be omitted.

Also in the structure shown in FIG. 6 and FIG. 7, the same effect as this embodiment can be obtained.

### (Embodiment 2)

An image reading apparatus of embodiment 2 of the invention will be described. A member having the same function as that of a member described in embodiment 1 is denoted by the same reference numeral and its detailed description is omitted. Hereinafter, a point different from embodiment 1 will be mainly described.

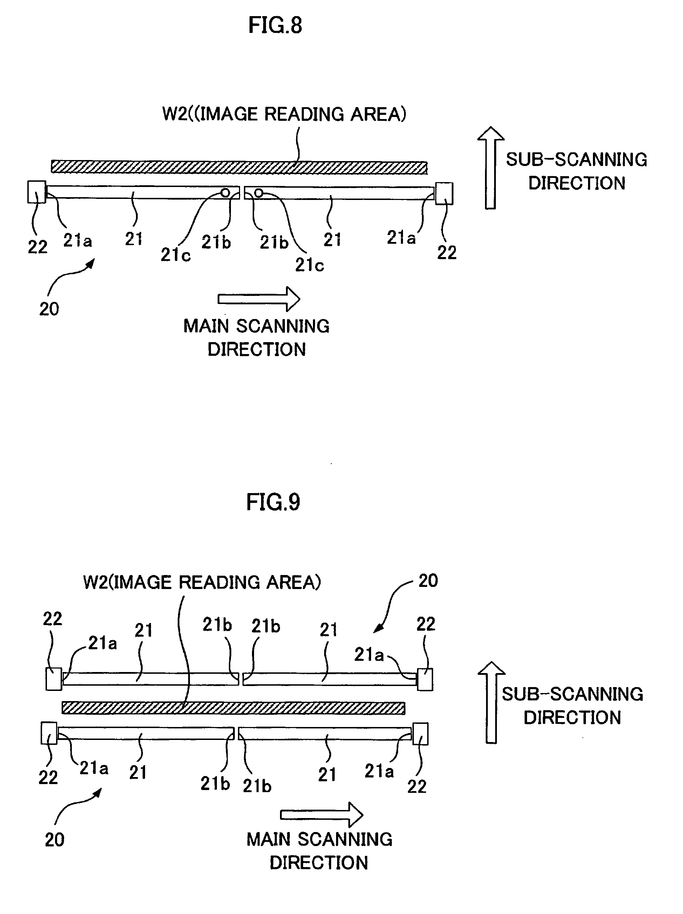

In this embodiment, as shown in FIG. 8, two light guide bodies 21 are used to illuminate an image reading area of one line extending in a main scanning direction. FIG. 8 is a top view of an illuminating device 20 of this embodiment when viewed from a platen glass 11.

Each of the light guide bodies 21 extends in the main scanning direction, and the two light guide bodies 21 are disposed side by side in the main scanning direction. A leading end 21b of one light guide body 21 is opposite to a leading end 21b of the other light guide body 21 in the main scanning direction.

The two leading ends 21b may be separate from each other in the main scanning direction, or may contact with each other. It is desirable that the two leading ends 21b are disposed to be close to each other.

Even if the two leading ends 21b are separate from each other in the main scanning direction, when the irradiation range (irradiation angle) of the illumination light from each of the light guide bodies 21 is appropriately set, the illumination light can be irradiated to the whole image reading area W2. That is, even if the two leading ends 21b are separate from each other in the main scanning direction, it is possible to prevent an area not irradiated with the illumination light from occurring in the image reading area W2.

Besides, the leading end 21b of the light guide body 21 is provided with a projection 21c for positioning the light guide body 21 in a case of the illuminating device 20. The projection 21c is provided on a surface different from an exit surface of the light guide body 21. The case of the illuminating device 20 is formed with a groove engaging with the projection 21c.

A light source 22 is disposed at a base end (incident surface) 21a of each of the light guide bodies 21, and the illumination light generated by the light source 22 is incident on the inside of the light guide body 21 from the incident surface formed on the base end 21a of each of the light guide bodies 21. In this embodiment, the two light sources 22 are disposed at positions corresponding to both ends of the image reading area W2 in the main scanning direction.

The two light guide bodies 21 have the same shape. Specifically, the lengths of the respective light guide bodies 21 in the main scanning direction are substantially equal to each other.

The structure of each of the light guide bodies 21 can be appropriately set. For example, the light guide body 21 described in embodiment 1 can be used as the light guide body 21 in this embodiment.

In this case, in addition to the light guide body 21, it is necessary to provide the reflecting member described in embodiment 1. When providing the reflecting member, the reflecting member can be provided correspondingly to each of the light guide bodies 21, or one reflecting member can be provided for the two light guide bodies 21. When one reflecting member is provided, the length of the reflecting member in the main scanning direction is set to the length corresponding to the length of the image reading area W2 in the main scanning direction.

On the other hand, the illumination light exiting from the light guide body 21 may be made to directly reach the image reading area W2.

According to this embodiment, since the two light guide bodies 21 are used, as compared with the case where the one light guide body 21 is used, the length of the light guide body 21 in the main scanning direction can be shortened. Since the length of the light guide body 21 is shortened, the light guide body 21 can be easily manufactured.

FIG. 9 shows a structure of an illuminating device 20 of a modified example of this embodiment. FIG. 9 is a top view when the illuminating device 20 is shown from a platen glass 11.

In the structure shown in FIG. 9, two light guide bodies 21 are disposed side by side in the main scanning direction, and a pair of light guide bodies 21 are disposed at positions between which an image reading area W2 is sandwiched in the sub-scanning direction. When the light guide body 21 described in embodiment 1 is used as the light guide body 21, it is necessary to provide the reflecting member 25 described in embodiment 1. Here, the reflecting member 25 may be disposed at a position where an interference with the light guide body 21 is avoided.

In the structure shown in FIG. 9, the illuminance in the image reading area W2 can be improved. Besides, the illumination lights can be irradiated to the image reading area W2 from directions different from each other, and the variation of light amount in the image reading area W2 can be suppressed.

In this embodiment, although the two light guide bodies 21 disposed side by side in the main scanning direction are formed into the same shape, they may be formed into shapes different from each other. Specifically, the lengths of the light guide bodies 21 in the main scanning direction can be made different from each other. When the two light guide bodies 21 having lengths different from each other are used, the total length of the two light guide bodies 21 (length in the main scanning direction) has only to correspond to the length of the image reading area W2.

### (Embodiment 3)

An image reading apparatus of embodiment 3 of the invention will be described. A member having the same function as that of a member described in embodiment 1 is denoted by the same reference numeral and its detailed description is omitted.

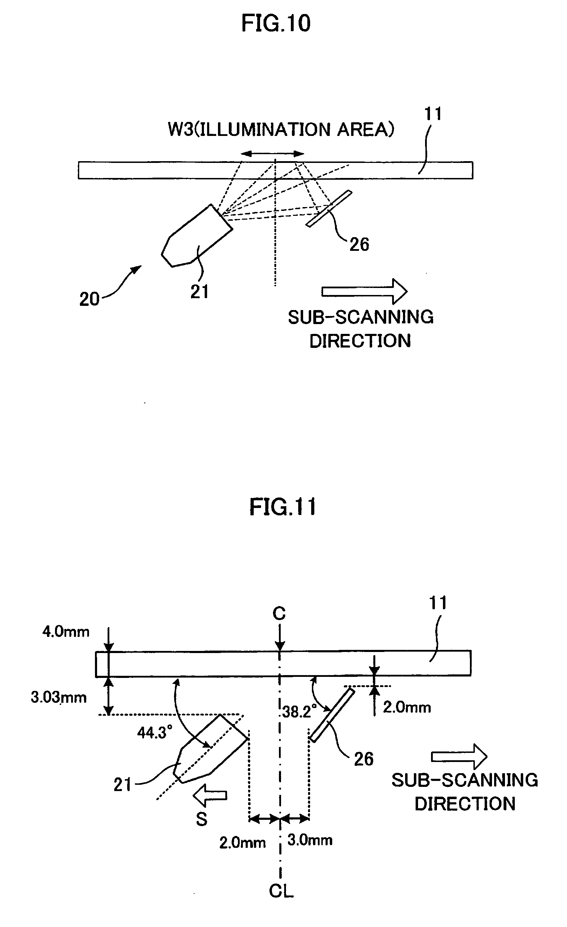

FIG. 10 is a schematic view showing a structure of an illuminating device 20 of this embodiment, and is a view when the illuminating device 20 is viewed from a main scanning direction.

Illumination light generated by a light source 22 is incident on a light guide body 21 extending in the main scanning direction, and the illumination light exiting from the light guide body 21 reaches an image reading area. The structure of the light guide body 21 can be made to have the same structure as the structure of the light guide body 21 described in embodiment 1, or can be made a structure different from the structure of the light guide body 21 described in embodiment 1.

Part of the illumination light exiting from the light guide body 21 directly reaches a platen glass 11, and the remainder reaches a reflecting member 26. The reflecting member 26 reflects the illumination light from the light guide body 21 to the platen glass 11.

The light component directly directed to the platen glass 11 from the light guide body 21 and the light component directed to the platen glass 11 from the reflecting member 26 are superimposed on each other in an illumination area W3 (see FIG. 3).

The reflecting surface of the reflecting member 26 may be formed of a plane surface or may be formed of a curved surface (concave surface or convex surface). The reflecting member 26 can be formed of a member having a shiny reflecting surface or a reflecting coating can be applied to the reflecting surface of the reflecting member 26. Further, the reflecting surface of the reflecting member 26 can be formed under a condition that the illumination light from the light guide body 21 is totally reflected. Besides, as the reflecting member 26, a member to diffuse light may be used.

FIG. 11 is a view for explaining the arrangement of the illuminating device 20 in this embodiment. FIG. 11 shows also specific numerical values (one example) relating to positions of respective members constituting the illuminating device 20.

In the structure shown in FIG. 11, the light guide body 21 (including the light source 22) is disposed so that the intensity of the illumination light directly reaching the platen glass 11 from the light guide body 21 becomes maximum at a position shifted in the sub-scanning direction from the center C of the image reading area W2.

Specifically, the light guide body 21 is shifted in a direction (direction of an arrow S of FIG. 11) of moving away from a center line CL with respect to a position of the light guide body 21 where the intensity of the illumination light becomes maximum at the center C. The direction of the shift of the light guide body 21 is the direction along the surface of the platen glass 11.

The center C of the image reading area W2 is the center of the image reading area W2 in the sub-scanning direction. Besides, the center line CL is the line (virtual line) passing through the center C and perpendicular to the surface of the platen glass 11. The intensity of the illumination light is the intensity of the illumination light in the sub-scanning direction.

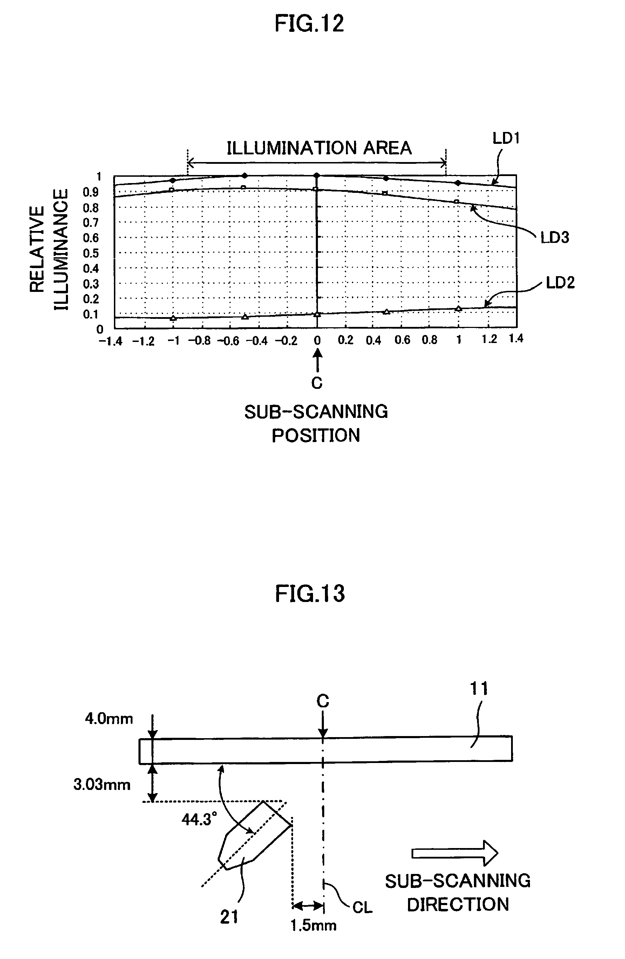

The light guide body 21 is disposed as described above, so that the intensity distribution of the illumination light directly reaching the platen glass 11 from the light guide body 21 becomes a distribution LD1 shown in FIG. 12. FIG. 12 shows the light intensity distribution in the sub-scanning direction when the illuminating device 20 shown in FIG. 11 is used. The horizontal axis of FIG. 12 indicates a position in the sub-scanning direction, and the vertical axis indicates relative illuminance.

In FIG. 12, the sub-scanning position of the center C of the image reading area W2 is made 0. Besides, a minus range shown in FIG. 12 corresponds to an area positioned at the left side of FIG. 11 with respect to the center C, and a plus range shown in FIG. 12 corresponds to an area positioned at the right side of FIG. 11 with respect to the center C.

In the structure shown in FIG. 11, the peak value of the light intensity distribution LD1 is shifted to the minus direction with respect to the center C (sub-scanning position: 0).

On the other hand, the intensity distribution of the illumination light reaching the platen glass 11 from the reflecting member 26 is indicated as a distribution LD2. As indicated by the light intensity distribution LD2, the relative illuminance in the plus range of the sub-scanning position is higher than the relative illuminance in the minus range of the sub-scanning position. The reflecting member 26 is disposed so that the light intensity distribution LD2 shown in FIG. 12 is obtained.

The light intensity distributions LD1 and LD2 are set as described above, so that the light intensity distribution of the illuminating device 20 becomes a distribution LD3 shown in FIG. 12.

According to this embodiment, the peak values of the light intensity distributions LD1 and LD2 are made to appear at both sides of the center C in the sub-scanning direction, so that the variation of the whole light intensity distribution LD3 of the illuminating device 20 can be suppressed. The range in which the variation of the relative illuminance is suppressed can be widened in the sub-scanning direction.

Besides, according to this embodiment, in the illumination light exiting from the light guide body 21, the light component which is not directed to the image reading area W2 can be directed to the image reading area W2 by using the reflecting member 26, and the light from the light guide body 21 can be efficiently used.

FIG. 13 is a view for explaining the arrangement of an illuminating device 20 of a comparative example of this embodiment. In the structure shown in FIG. 13, the reflecting member 26 is omitted from the structure described in FIG. 11, and all illumination light exiting from the light guide body 21 is made to directly reach a platen glass 11.

Besides, the orientation of the light guide body 21 is set so that the intensity of the illumination light from the light guide body 21 becomes highest at the center C of the image reading area W2. Specifically, the light guide body 21 is disposed at a position closer to the center line CL than the position of the light guide body 21 shown in FIG. 11. Incidentally, the interval between the platen glass 11 and the light guide body 21 and the inclination angle of the light guide body 21 with respect to the surface of the platen glass 11 are that same as those of the structure shown in FIG. 11.

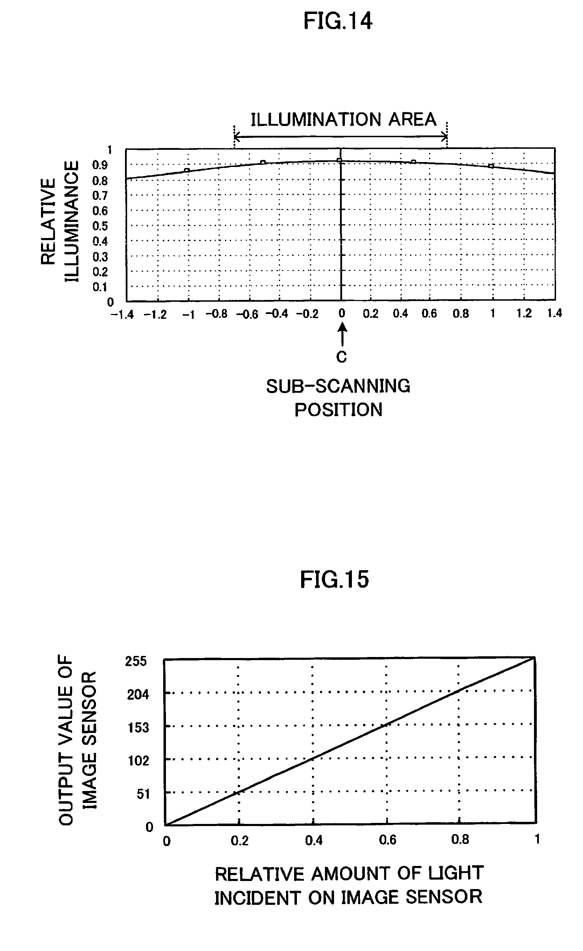

FIG. 14 shows a light intensity distribution on an image reading area W2 in the structure shown in FIG. 13. As shown in FIG. 14, as a position becomes distant from the center C of the image reading area W2 in the sub-scanning direction, the light intensity in the image reading area is reduced.

Here, when the illumination area is defined as described below, according to the structure of this embodiment, as compared with the structure shown in FIG. 13, the illumination area can be widened while the variation of illuminance is suppressed.

In a CCD image sensor 16, when the relative illuminance of light incident on the CCD image sensor 16 is changed in the range of from 0 to 1, the signal value outputted from the CCD image sensor 16 is changed in the range of from 0 to 255. FIG. 15 shows a relation between the relative illuminance of light incident on the image sensor 16 and the output signal of the image sensor.

Here, when an image is read, in order to keep the quality of the image, it is desirable to irradiate the illumination light at substantially uniform illuminance to the whole image reading area W2. It is desirable that the variation of the output value is 9 or less relative to the output value of the image sensor 16. Besides, from the correspondence relation shown in FIG. 15, it is desirable that the decreasing rate of the relative illuminance is 0.035 or less.

Then, the area in which the decreasing rate of the relative illuminance is within the range of 0.035 with respect to the peak value is defined as the illumination area W3.

When the illumination area is defined as described above, as shown in FIG. 12 and FIG. 14, the width of the illumination area in the structure of this embodiment is wider than the width of the illumination area in the structure of the comparative example.

In the foregoing description, although the range in which the decreasing rate of the relative illuminance is 0.035 or less is defined as the illumination area W3, the value of the decreasing rate of the relative illuminance defining the illumination area W3 can be appropriately set.

In this embodiment, although the peak value of the intensity distribution LD1 is shifted with respect to the center line CL to the side where the light guide body 21 is disposed, the peak value of the intensity distribution LD1 can be shifted with respect to the center line CL to the side where the light guide body 21 is not disposed. Here, with respect to the light intensity distribution LD2 obtained by the reflected light of the reflecting member 26, the relative illuminance at the side of the light guide body 21 with respect to the center line CL has only to be higher than the relative illuminance at the side opposite to the light guide body 21. By this, similarly to this embodiment, the illumination area can be widened while the variation of the relative illuminance is suppressed.

On the other hand, in this embodiment, although the peak value of the light intensity distribution LD1 is shifted with respect to the center C in the sub-scanning direction by changing the distance between the light guide body 21 and the center line CL, also when another arrangement parameter is changed, the peak value of the light intensity distribution LD1 can be shifted. For example, the peak value of the light intensity distribution LD1 can be shifted by changing the inclination angle of the light guide body 21 with respect to the platen glass 11, in other words, the illumination angle of the illumination light irradiated from the light guide body 21.

Besides, in this embodiment, although the peak values of the light intensity distributions LD1 and LD2 are shifted with respect to the center C of the image reading area W2, another reference position different from the center C is set, and the peak values of the light intensity distributions LD1 and LD2 can be shifted with respect to the set reference position.

In this embodiment, first, the peak value of the light intensity distribution LD1 is shifted with respect to the center C, and the light intensity distribution LD2 can be determined in view of the light intensity distribution LD1 in the state where the peak value is shifted with respect to the center C. The light intensity distribution LD2 can be set by changing the shape or the angle of the reflecting surface of the reflecting member 26.

## Claims

1. An illuminating device (20) comprising:
a light source (22) that generates an illumination light used for reading of an image;
a light guide body (21) that extends in a specified direction and includes an incident surface (21a) which is formed at one end in the specified direction and on which the illumination light from the light source is incident, a first exit surface (23a,23c,23f) through which a first light component passes, and a second exit surface (23b, 23d, 23g) which faces a direction different from the first exit surface (23a,23c,23f) and through which a second light component directed to a direction different from the first light component passes; and
a reflecting member (25) to reflect the second light component exiting from the second exit surface (23b,23d,23g) to an image reading area,
**characterized in that**
the light guide body (21) includes a reflecting surface (23r) which diffuses or reflects the illumination light incident from the incident surface,
the first light component reflected by the reflecting surface (23r) and directly directed to the image reading area passes through the first exit surface (23a,23c,23f), and
the second light component reflected by the reflecting surface (23r) passes through the second exit surface (23b, 23d, 23g) .

2. The device (20) of claim 1, wherein
the first exit surface (23a, 23c, 23f) faces a plane where the image reading area is positioned, and
the second exit surface (23b,23d,23g)guides the second light component in a direction along the plane.

3. The device (20) of claim 2, wherein
the first light component passes through an area of part of the first exit surface (23a,23c,23f), and
the second exit surface (23b,23d,23g) is provided at a position deviating from an optical path of the first light component.

4. The device (20) of claim 3, wherein the second exit surface (23b,23d,23g) has a positive optical power.

5. The device (20) of claim 4, wherein the second exit surface (23b,23d,23g) converts the second light component incident on the second exit surface (23b,23d,23g) into a parallel light, which exits from the second exit surface (23b,23d,23g).

6. The device (20) of claim 2, wherein the first light component is incident on the first exit surface (23a, 23c, 23f) at an incident angle different from an incident angle of total reflection.

7. The device (20) of claim 1, wherein the light guide body (21) includes a prism (23) and a case (24), the case (24) that covers a part of the prism (23) and forms the reflecting surface (23r).

8. The device (20) of claim 1, wherein the light guide body (21) includes a prism (23).

9. The device (20) of claim 1, wherein
a plurality of the light guide bodies (21) to each of which the light source (22) is attached are provided, and
the plurality of the light guide bodies (21) are disposed side by side in the specified direction.

10. The device (20) of claim 9, wherein
the light source (22) is fixed to a base end of each of the light guide bodies, and
leading ends (21b) of the plurality of the light guide bodies (21) are disposed adjacent to each other in the specified direction.

11. The device (20) of claim 10, wherein the leading end (21b) of each of the light guide bodies (21) has a projection (21c) used for positioning of the light guide body (21).

12. The device (20) of claim 9, wherein when viewed from a direction perpendicular to a plane where the image reading area is positioned, the plurality of the light guide bodies (21) disposed side by side in the specified direction are respectively disposed at position between which the image reading area is sandwiched.

13. An image reading apparatus (103) comprising:
the illuminating device (20) of claim 1; and
a light receiving element (16) that receives the illumination light irradiated from the illuminating device (20) and reflected by a document.

14. An illuminating method, comprising:
generating an illumination light used for reading of an image;
causing the illumination light to be incident on an incident surface (21a) formed at one end of a light guide body (21) extending in a specified direction;
causing a first light component of the illumination light to exit from a first exit surface (23a,23c,23f) of the light guide body (21);
causing a second light component of the illumination light to exit from a second exit surface (23b, 23d, 23g) of the light guide body (21) which faces a direction different from the first exit surface (23a,23c,23f); and
reflecting the second light component exiting from the second exit surface (23b,23d,23g) to an image reading area,
**characterized in that** it comprises:
diffusing or reflecting the illumination light incident from the incident surface (21a) by using a reflecting surface (23r) of the light guide body,
the first light component reflected by the reflecting surface (23r) exits from the first exit surface (23a, 23c, 23f) and is directly directed to the image reading area, and
the second light component reflected by the reflecting surface (23r) exits from the second exit surface (23b, 23d, 23g).

## Patentansprüche

1. Beleuchtungsvorrichtung (20), die umfasst:
eine Lichtquelle (20), die ein Beleuchtungslicht zum Lesen eines Bilds erzeugt;
einen Lichtleitkörper (21), der sich in einer spezifizierten Richtung erstreckt und eine Einfallsoberfläche (21 a) umfasst, die an einem Ende in der spezifizierten Richtung ausgebildet ist und auf die das Beleuchtungslicht von der Lichtquelle einfällt, eine erste Austrittsoberfläche (23a, 23c, 23f), durch die eine erste Lichtkomponente geht, und eine zweite Austrittsoberfläche (23b, 23d, 23g), die einer Richtung zugewandt ist, die sich von der ersten Austrittsoberfläche (23a, 23c, 23f) unterscheidet und durch die eine zweite Lichtkomponente, die in eine Richtung gerichtet ist, die sich von der ersten Lichtkomponente unterscheidet, geht; und
ein reflektierendes Element (25), um die zweite Lichtkomponente zu reflektieren, die aus der zweiten Austrittsoberfläche (23b, 23d, 23g) zu einem Bildlesebereich austritt,
**dadurch gekennzeichnet, dass**
der Lichtleitkörper (21) eine reflektierende Oberfläche (23r) umfasst, die das Beleuchtungslicht, das von der Einfallsoberfläche einfällt, zerstreut oder reflektiert,
die von der reflektierenden Oberfläche (23r) reflektierte und direkt zu dem Bildlesebereich geleitete erste Lichtkomponente durch die erste Austrittsoberfläche (23a, 23c, 23f) geht, und
die von der reflektierenden Oberfläche (23r) reflektierte zweite Lichtkomponente durch die zweite Austrittsoberfläche (23b, 23d, 23g) geht.

2. Vorrichtung nach Anspruch 1, wobei
die erste Austrittsoberfläche (23a, 23c, 23f) einer Ebene zugewandt ist, wo der Bildlesebereich positioniert ist, und
die zweite Austrittsoberfläche (23b, 23c, 23f) die zweite Lichtkomponente in eine Richtung entlang der Ebene leitet.

3. Vorrichtung (20) nach Anspruch 2, wobei
die erste Lichtkomponente durch einen Bereich eines Teils der ersten Austrittsoberfläche (23a, 23c, 23f) geht, und
die zweite Austrittsoberfläche (23b, 23d, 23g) an einer Position bereitgestellt ist, die von einem Lichtweg der ersten Lichtkomponente abweicht.

4. Vorrichtung (20) nach Anspruch 3, wobei die zweite Austrittsoberfläche (23b, 23d, 23g) eine positive optische Leistung hat.

5. Vorrichtung nach Anspruch 4, wobei die zweite Austrittsoberfläche (23b, 23d, 23g) die zweite Lichtkomponente, die auf die zweite Austrittsoberfläche (23b, 23d, 23g) einfällt, in ein paralleles Licht umwandelt, das aus der zweiten Austrittsoberfläche (23b, 23d, 23g) austritt.

6. Vorrichtung (20) nach Anspruch 2, wobei die erste Lichtkomponente in einem Einfallswinkel auf die erste Austrittsoberfläche (23a, 23c, 23f) einfällt, der sich von einem Einfallswinkel der Totalreflexion unterscheidet.

7. Vorrichtung (20) nach Anspruch 1, wobei der Lichtleitkörper (21) ein Prisma (23) und ein Gehäuse (24) umfasst, wobei das Gehäuse (24) einen Teil des Prismas (23) bedeckt und die reflektierende Oberfläche (23r) bildet.

8. Vorrichtung (20) nach Anspruch 1, wobei der Lichtleitkörper (21) ein Prisma (23) umfasst.

9. Vorrichtung (20) nach Anspruch 1, wobei
eine Vielzahl der Lichtleitkörper (21), an denen jeweils die Lichtquelle (22) befestigt ist, bereitgestellt ist, und
die Vielzahl der Lichtleitkörper (21) in der spezifizierten Richtung nebeneinander angeordnet ist.

10. Vorrichtung (20) nach Anspruch 9, wobei
die Lichtquelle (22) an einem Basisende jedes der Lichtleitkörper befestigt ist, und
führende Enden (21b) der Vielzahl der Lichtleitkörper (21) in der spezifizierten Richtung nebeneinander angeordnet sind.

11. Vorrichtung (20) nach Anspruch 10, wobei das führende Ende (21b) jedes der Lichtleitkörper (21) einen Vorsprung (21c) hat, der verwendet wird, um den Lichtleitkörper (21) zu positionieren.

12. Vorrichtung (20) nach Anspruch 9, wobei die Vielzahl der Lichtleitkörper (21), die in der spezifizierten Richtung nebeneinander angeordnet ist, aus einer Richtung senkrecht zu einer Ebene, in welcher der Bildlesebereich positioniert ist, gesehen jeweils an einer Position angeordnet ist, zwischen welcher die Bildlesebereich eingeschoben ist.

13. Bildlesevorrichtung (103), die umfasst:
die Beleuchtungsvorrichtung (20) nach Anspruch 1; und
ein lichtaufnehmendes Element (16), welches das Beleuchtungslicht aufnimmt, das von der Beleuchtungsvorrichtung (20) abgestrahlt und von einem Dokument reflektiert wird.

14. Beleuchtungsverfahren, das umfasst:
Erzeugen von Beleuchtungslicht, das zum Lesen eines Bilds verwendet wird;
Bewirken, dass das Beleuchtungslicht auf eine Einfallsoberfläche (21 a) einfällt, die an einem Ende eines Lichtleitkörpers (21) ausgebildet ist, der sich in einer spezifizierten Richtung erstreckt;
Bewirken, dass eine erste Lichtkomponente des Beleuchtungslichts aus einer ersten Austrittsoberfläche (23a, 23c, 23f) des Lichtleitkörpers (21) austritt;
Bewirken, dass eine zweite Lichtkomponente des Beleuchtungslichts aus einer zweiten Austrittsoberfläche (23b, 23d, 23g) des Lichtleitkörpers (21), die einer Richtung zugewandt ist, die sich von der ersten Austrittsoberfläche (23a, 23c, 23f) unterscheidet, austritt; und
Reflektieren der aus der zweiten Austrittsoberfläche (23b, 23d, 23g) austretenden zweiten Lichtkomponente zu einem Bildlesebereich,
**dadurch gekennzeichnet, dass** es umfasst:
Zerstreuen oder Reflektieren des Beleuchtungslichts, das von der Einfallsoberfläche (21 a) einfällt, unter Verwendung einer reflektierenden Oberfläche (23r) des Lichtleitkörpers,
wobei die von der reflektierenden Oberfläche (23r) reflektierte erste Lichtkomponente aus der ersten Austrittsoberfläche (23a, 23c, 23f) austritt und direkt zu dem Bildlesebereich geleitet wird, und
die von der reflektierenden Oberfläche (23r) reflektierte zweite Lichtkomponente aus der zweiten Austrittsoberfläche (23b, 23d, 23g) austritt.

## Revendications

1. Dispositif d'éclairement (20) comprenant :
une source de lumière (22) qui génère un rayon de lumière d'éclairement utilisé afin d'assurer la lecture d'une image ;
un corps de guidage de lumière (21) qui s'étend dans une direction spécifiée et comporte une surface d'incidence (21a) qui est formée à une extrémité dans la direction spécifiée et sur laquelle le rayon de lumière d'éclairement provenant de la source de lumière est incident, une première surface de sortie (23a, 23c, 23f) à travers laquelle une première composante lumineuse et une seconde surface de sortie (23b, 23d, 23g) qui fait face à une direction différente de la première surface de sortie (23a, 23c, 23f) et à travers laquelle passe une seconde composante lumineuse dirigée dans une direction différente de celle de la première composante lumineuse, et
un élément réfléchissant (25) destiné à réfléchir la seconde composante lumineuse sortant par la seconde surface de sortie (23b, 23d, 23g) vers une zone de lecture d'image,
**caractérisé en ce que**
le corps de guidage de lumière (21) comporte une surface réfléchissante (23r) qui diffuse ou réfléchit le rayon de lumière d'éclairement incident à partir de la surface d'incidence,
la première composante lumineuse réfléchie par la surface réfléchissante (23r) et dirigée directement vers la zone de lecture d'image passe à travers la première surface de sortie (23a, 23c, 23f), et
la seconde composante lumineuse réfléchie par la surface réfléchissante (23r) passe à travers la seconde surface de sortie (23b, 23d, 23g).

2. Dispositif (20) selon la revendication 1, dans lequel
la première surface de sortie (23a, 23c, 23f) fait face à un plan sur lequel la zone de lecture d'image est positionnée, et
la seconde surface de sortie (23b, 23d, 23g) guide la seconde composante lumineuse dans une direction suivant le plan.

3. Dispositif (20) selon la revendication 2, dans lequel
la première composante lumineuse passe à travers une zone d'une partie de la première surface de sortie (23a, 23c, 23f), et
la seconde surface de sortie (23b, 23d, 23g) est agencée à une position s'écartant d'un trajet optique de la première composante lumineuse.

4. Dispositif (20) selon la revendication 3, dans lequel la seconde surface de sortie (23b, 23d, 23g) présente une puissance optique positive.

5. Dispositif (20) selon la revendication 4, dans lequel la seconde surface de sortie (23b, 23d, 23g) transforme la seconde composante lumineuse incidente sur la seconde surface de sortie (23b, 23d, 23g) en un rayon de lumière parallèle qui sort par la seconde surface de sortie (23b, 23d, 23g).

6. Dispositif (20) selon la revendication 2, dans lequel la première composante lumineuse est incidente sur la première surface de sortie (23a, 23c, 23f) sous un angle d'incidence différent d'un angle d'incidence de réflexion totale.

7. Dispositif (20) selon la revendication 1, dans lequel le corps de guidage de lumière (21) comporte un prisme (23) et un coffret (24), le coffret (24) recouvre une partie du prisme et forme la surface réfléchissante (23r).

8. Dispositif (20) selon la revendication 1, dans lequel le corps de guidage de lumière (21) comporte un prisme (23).

9. Dispositif (20) selon la revendication 1, dans lequel
une pluralité de corps de guidage de lumière (21) sur chacun desquels la source de lumière (22) est fixée est agencée, et
les corps de la pluralité de corps guidage lumière (21) sont disposés côte à côte suivant la direction spécifiée.

10. Dispositif (20) selon la revendication 9, dans lequel
la source de lumière (22) est fixée sur une extrémité de base de chacun des corps de guidage de lumière, et
les extrémités avant (21b) de la pluralité de corps de guidage de lumière (21) sont disposées de manière adjacente l'une à l'autre dans la direction spécifiée.

11. Dispositif (20) selon la revendication 10, dans lequel l'extrémité avant (21b) de chacun des corps de guidage de lumière (21) présente une saillie (21c) utilisée afin d'assurer le positionnement du corps de guidage de lumière (21).

12. Dispositif (20) selon la revendication 9, dans lequel, lorsqu'ils sont vus depuis une direction perpendiculaire à un plan dans lequel la zone de lecture d'image est positionnée, les corps de la pluralité de corps de guidage de lumière (21) disposés côte à côte dans la direction spécifiée sont disposés respectivement à des emplacements entre lesquels la zone de lecture d'image est intercalée.

13. Dispositif de lecture d'image (103) comprenant :
le dispositif d'éclairement (20) selon la revendication 1, et
un élément récepteur de lumière (16) qui reçoit le rayon de lumière d'éclairement rayonné à partir du dispositif d'éclairement (20) et réfléchi par un document.

14. Procédé d'éclairement comprenant :
la production d'un rayon de lumière d'éclairement utilisé afin d'assurer la lecture d'une image ;
le guidage du rayon de lumière d'éclairement de manière qu'il soit incident sur une surface d'incidence (21a) formée au niveau d'une extrémité d'un corps de guidage (21) s'étendant dans une direction spécifiée ;
le guidage d'une première composante lumineuse du rayon de lumière d'éclairement afin qu'elle sorte par une première surface de sortie (23a, 23c, 23f) du corps de guidage de lumière (21) ;
le guidage d'une seconde composante lumineuse du rayon de lumière d'éclairement de manière qu'elle sorte par une seconde surface de sortie (23b, 23d, 23g) du corps de guidage de lumière (21) qui fait face à une direction différente de celle de la première surface de sortie (23a, 23c, 23f) ; et
la réflexion de la seconde composante lumineuse sortant par la seconde surface de sortie (23b, 23d, 23g) vers une zone de lecture d'image,
**caractérisé en ce qu'**il comprend
la diffusion ou la réflexion du rayon de lumière d'éclairement incident à partir de la surface d'incidence (21a) en utilisant une surface réfléchissante (23r) du corps de guidage de lumière,
la première composante lumineuse réfléchie par la surface réfléchissante (23r) sort par la première surface de sortie (23a, 23c, 23f) et est dirigée directement vers la zone de lecture d'image, et
la seconde composante lumineuse réfléchie par la surface réfléchissante (23r) sort par la seconde surface de sortie (23b, 23d, 23g).
